# EUROPEAN PATENT SPECIFICATION

(11) **EP 3 346 789 B1**
(45) Date of publication and mention of the grant of the patent: **20.11.2019**
(21) Application number: 18153361.3
(22) Date of filing: 17.06.2013
(51) Int. Cl.: H04W 72/12

(54) **BASE STATION AND METHOD OF OPERATING A BASE STATION**
BASISSTATION UND VERFAHREN ZUM BETREIBEN EINER BASISSTATION
STATION DE BASE ET SON PROCÉDÉ DE FONCTIONNEMENT

(43) Date of publication of application: 11.07.2018
(62) Divisional of application: 13290144.8
(73) Proprietor: Alcatel Lucent, 91620 Nozay (FR)
(72) Inventor: BRAUN, Volker, 70435 Stuttgart (DE); DOETSCH, Uwe, 70435 Stuttgart (DE)
(74) Representative: Nokia EPO representatives

(56) References cited:
- EP-A1- 2 509 380
- US-A1- 2011 103 292
- OJANPERÄ ET AL: "FRAMES-hybrid multiple access technology", IEEE ISSSTA. IEEE INTERNATIONAL SYMPOSIUM ON SPREAD SPECTRUMTECHNIQUES AND APPLICATIONS, XX, XX, no. 1, 22 September 1996 (1996-09-22), pages 320-324, XP002077020,

## Description

### Specification

### Field of the invention

The present invention relates to a terminal for a cellular communication network, wherein the terminal selectively uses different time intervals.

### Background

One example for a communications standard where time and frequency resources are used for data transmission is the LTE standard, which is inter alia defined by 3GPP (3rd Generation Partnership Project) Specification series 3GPP TS 36.xxx, wherein 3GPP TS 36.211 relates to Physical Channels and Modulation. For further explanations in this application, the term "LTE standard" generally refers to the specification series 3GPP TS 36.xxx, particularly to LTE Release 8.

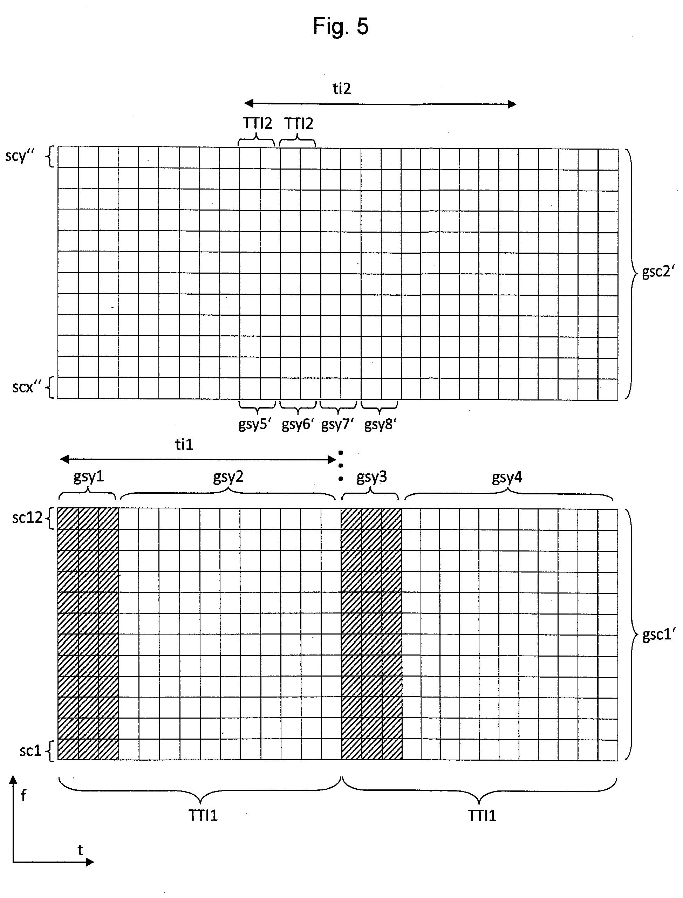

More specifically, regarding 3GPP TS 36.211, in the following description, document version V8.7.0 is referred to, which is e.g. available on the World Wide Web (http://www.3gpp.org/ftp/Specs/html-info/36211.htm). This document depicts time/frequency transmission resources for uplink and downlink transmissions, cf. e.g. Figure 5.2.1-1: Uplink resource grid and Figure 6.2.2-1: Downlink resource grid. According to these Figures, time/frequency transmission resources are partitioned into a plurality of subsequent SC-FDMA or OFDMA symbols along the time dimension, and into a plurality of subsequent subcarriers along the frequency dimension.

Ojanpera et al.:"FRAMES-hybrid multiple access technology", IEEE ISSSTA. IEEE INTERNATIONAL SYMPOSIUM ON SPREAD SPECTRUMTECHNIQUES AND APPLICATIONS, no. 1, 22 September 1996, pages 320-324 discloses a multiple access scheme of slotted multiple access as a hybrid consisting of TDMA, CDMA and multi-carrier techniques. Within one slot, several users can be active which are separated by their user-specific CDMA codes. The mode of operation for a user is defined by the number of assigned slots which is given by the number k of assigned carriers and the number 1 of assigned time slots, the number j of assigned CDMA codes and by the order m of modulation.

It is an object of the present invention to provide an improved method of operating a base station, an improved base station, and improved methods of operating a terminal and improved terminals as well as an improved method of operating a cellular communications network, which enable efficient data transmissions with low end-to-end ("E2E") latencies.

### Summary

The invention is defined in the appended claims. According to an aspect, a first scheduling granularity is used for scheduling first resources associated with a first frequency range, and wherein a second scheduling granularity, which is different from said first scheduling granularity, is used for scheduling second resources associated with a second frequency range. This advantageously enables a base station to e.g. serve different terminals with different scheduling granularities so that different latency requirements may be accommodated by a single system.

According to an aspect, the different scheduling granularities are provided along the time dimension, e.g. by providing different transmission time intervals. This advantageously enables to influence, particularly reduce, latencies for data transmissions. According to a further embodiment, different scheduling granularities may also be implemented by providing non-contiguous resource regions along time and/or frequency dimension.

According to a further aspect, different scheduling granularities are also used along a frequency dimension. I.e. within the LTE context, different numbers of subcarriers (which may also comprise one single or more subcarriers) may be the smallest resource unit for scheduling along frequency dimension, instead of whole resource blocks comprising e.g. 12 subcarriers. This increases flexibility in scheduling of resources. For example, when operating with a particularly small scheduling granularity along time dimension, to assign a substantial amount of resources, a larger scheduling granularity along frequency dimension may be chosen to attain a required amount of time and frequency resources.

According to an aspect, a first scheduling granularity used by the base station according to the embodiments may correspond with a conventional scheduling granularity. I.e., when applying the principle according to the embodiments to e.g. the LTE standard (Rel. 8, for example), it is possible that the base station according to the embodiments uses as a first scheduling granularity the scheduling granularity provided by LTE Rel. 8, which is 1 millisecond. However, according to the embodiments, a further, i.e. second scheduling granularity is also used by said base station, wherein the second scheduling granularity is preferably smaller than the first scheduling granularity. Thus, smaller "portions" of time/frequency resources may be provided for individual scheduling actions by the base stations, whereby shorter E2E latencies may be attained.

According to the aspects, the first scheduling granularity is used for scheduling first resources associated with a first frequency range, whereas the second scheduling granularity is used for scheduling second resources associated with a second frequency range. Thus, it is possible for the base station to use the different scheduling granularities in a temporally overlapping fashion or even simultaneously. Thus advantageously, different terminals may simultaneously be served by the base station with using different scheduling granularities. For instance, a first number of conventional LTE Rel. 8 compatible terminals may be served by the base station according to the embodiments, whereas simultaneously and within another frequency range, a second number of other terminals may be served by the base station according to the embodiments with a smaller scheduling granularity. These other terminals could e.g. form part of smart grid appliances and/or vehicle safety systems and/or generally machine-type communications a reliable operation of which requires small E2E latencies. Thereby, the base station according to the embodiments enables an advantageous double use of e.g. an existing LTE Rel. 8 infrastructure by serving conventional terminals (e.g. for voice and/or data services) in a conventional manner (i.e. with 1 ms scheduling granularity) and by serving terminals with particularly low latency requirements.

Although the aforementioned examples refer to LTE Rel. 8, the principle according to the embodiments is not limited to such LTE systems, but may generally be used with any communications system that makes use of time/frequency resources.

According to an aspect, said first resources associated with said first frequency range comprise at least a first group of, preferably adjacent, subcarriers, and/or said second resources associated with said second frequency range comprise at least a second group of, preferably adjacent, subcarriers. Thus, the overall resources available for data transmission may be partitioned into different portions each of which is used in combination with different scheduling granularities. The partitioning may be performed statically (i.e. by definition in a communications standard), semi-statically (negotiated from time to time between e.g. base station and terminals and/or determined from time to time by the base station) or dynamically (i.e. depending on terminals' requests for different or smaller scheduling granularities and the like). When using adjacent subcarriers for the first and second frequency ranges, a particularly simple partitioning of the resources is attained and signalling and/or control requirements are minimized.

According to a further aspect, said first frequency range is associated with a first component carrier, and/or said second frequency range is associated with a second component carrier, which is different from said first component carrier, whereby the inventive principle may also be applied to LTE Rel. 10 systems.

According to a further aspect, said first and second scheduling granularities are used within respective time intervals which at least partly overlap each other. Thus, at a time either one single (first or second) scheduling granularity may be used, or both scheduling granularities may be used (simultaneously).

According to a further aspect, during a specific time interval, said first scheduling granularity is used for scheduling resources associated with said first frequency range, and during said specific time interval, said second scheduling granularity is used for scheduling resources associated with said second frequency range. This is a particularly preferred embodiment, since simultaneous provisioning of different scheduling granularities - separated by means of the first/second frequency ranges - is enabled.

According to a further aspect, a first transmission time interval (TTI) is associated with said first scheduling granularity, and wherein a second transmission time interval, which is different from said first transmission time interval, is associated with said second scheduling granularity. According to a preferred embodiment, which may e.g. be used as extension to LTE Rel. 8, 9, 10 standard, the first TTI may e.g. be about 1 millisecond, whereas the second TTI may e.g. be about (1/7) ms, i.e. about 0.1428 ms.

According to a further aspect, resource partitioning information, which defines which of said frequency resources are to be used in combination with the first and/or second scheduling granularity (or further scheduling granularities, if more than two different scheduling granularities are provided), is provided semi-statically, preferably by means of system information broadcast, and/or radio resource control, RRC, signaling.

According to a further aspect, if specific time/ frequency resources that are associated with said second scheduling granularity are unused for a time interval exceeding a predetermined threshold value (for example predetermined by standardization or configured e.g. via O&M (operation and maintenance) or RNC, radio network control, said specific time frequency resources are, at least temporarily, used for scheduling data traffic associated with said first scheduling granularity. For example, if the base station reserves a second frequency range for use with a second scheduling granularity, and if this second frequency range is not used for transmissions with said second scheduling granularity for a predetermined waiting time, the base station may at least temporarily enable said second frequency range to be used with the first scheduling granularity, too. This may e.g. apply in a scenario, where the second frequency range is operated with small TTI / low scheduling granularity, e.g. for machine-type communications, and if actually no single terminal makes use of said second frequency range. In this case, e.g. conventional terminals using the regular (i.e., first) TTI and/or scheduling granularity may be scheduled for said second frequency range.

According to a further aspect, said base station determines whether a specific terminal supports said first scheduling granularity and/or said second scheduling granularity, and said base station schedules resources for said specific terminal depending on this determination. According to an embodiment, the determination may e.g. comprise interrogating a terminal and/or evaluating respective control information transmitted from said terminal to said base station.

According to a further aspect, the first scheduling granularity is about 1 millisecond, and the second scheduling granularity is smaller than said first scheduling granularity, wherein the second scheduling granularity preferably ranges from about 50 microseconds to about 200 microseconds.

According to a further embodiment, a number of hybrid automatic repeat request (HARQ) processes used within a specific frequency range depends on the scheduling granularity used within said specific frequency range.

A further aspect is given by a base station for a cellular communications network, wherein time and frequency resources are used for data transmission, wherein the base station is configured to use a first scheduling granularity for scheduling first resources associated with a first frequency range, and to use a second scheduling granularity, which is different from said first scheduling granularity, for scheduling second resources associated with a second frequency range.

According to an aspect, the base station is configured to, during a specific time interval, use said first scheduling granularity for scheduling resources associated with said first frequency range, and to use, during said specific time interval, said second scheduling granularity for scheduling resources associated with said second frequency range.

A further aspect, is given by a method of operating a terminal of a cellular communications network, wherein time and frequency resources are used for data transmission, wherein the terminal selectively uses different transmission time intervals for data transmissions from and/or to a base station.

According to an aspect, a first transmission time interval is associated with a first scheduling granularity of said base station, and wherein a second transmission time interval, which is different from said first transmission time interval, is associated with a second scheduling granularity of said base station. The terminal may determine which transmission time interval (TTI length) to use depending on static information, which is e.g. standardized and known to both the terminal and the base station, and/or depending on resource partitioning information provided by said base station via e.g. system information broadcast and/or RRC signalling. According to a further embodiment, the terminal may determine which transmission time interval (TTI length) to use by means of dynamic scheduling, e.g. a terminal may be able to receive data on TTI1 and/or TTI2 by scanning the respective DL (downlink) control channels, i.e. a first control channel for data on TTI1 and a second control channel for data on TTI2.

According to a further aspect, said terminal uses a first transmission time interval in a first frequency range, and said terminal uses a second transmission time interval, which is different from said first transmission time interval, in a second frequency range.

According to a further aspect, control data (e.g., CQI, RACH) is transmitted in a first frequency range with a first transmission time interval, and user data is transmitted in a second frequency range with a second transmission time interval.

A solution to the object of the present invention is given by a terminal for a cellular communications network, wherein time and frequency resources are used for data transmission, wherein the terminal is configured to selectively use different transmission time intervals for data transmissions from and/or to a base station, wherein said data transmissions may comprise control and/or user data.

A further aspect is given by a method of operating a cellular communications network, wherein time and frequency resources are used for data transmission between at least one base station and at least one terminal, wherein a first scheduling granularity is used for scheduling first resources associated with a first frequency range, and wherein a second scheduling granularity, which is different from said first scheduling granularity, is used for scheduling second resources associated with a second frequency range.

Further features, aspects and advantages of the present invention are given in the following detailed description with reference to the drawings in which:

### Brief description of the figures

- Figure 1: depicts a schematic block diagram of a base station and a terminal according to an embodiment,
- Figure 2: schematically depicts a simplified flow-chart of a method according to the embodiments,
- Figure 3: schematically depicts time/frequency resources according to an embodiment,
- Figure 4: schematically depicts time/frequency resources according to a further embodiment, and
- Figure 5: schematically depicts time/frequency resources according to a further embodiment.

### Description of the embodiments

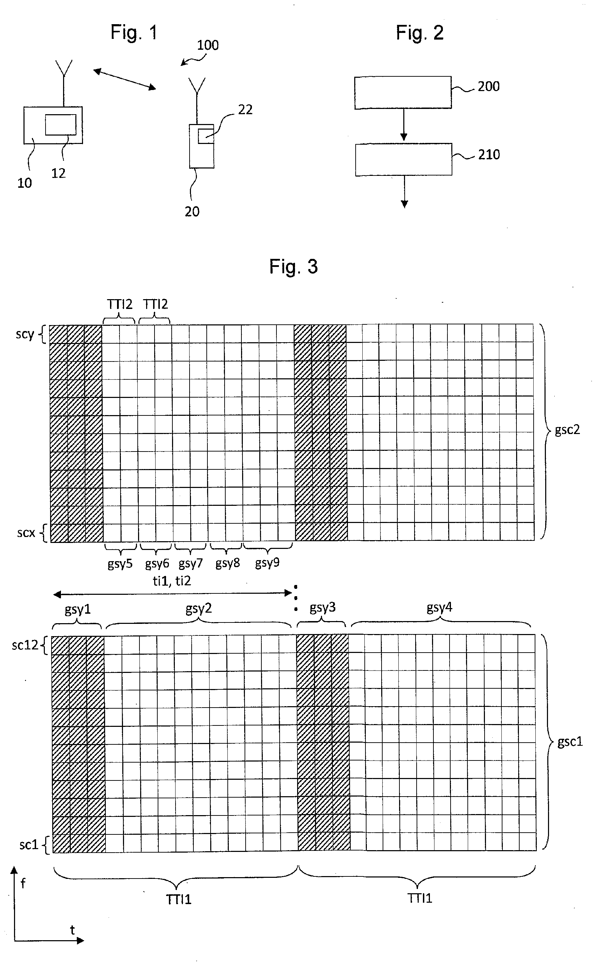

Figure 1 depicts a schematic block diagram of a base station 10 and a terminal 20 according to an embodiment. The devices 10, 20 may e.g. form part of a cellular communications network 100.

Although the principle of the embodiments is not limited to the LTE standard, for the further explanations it is assumed that a basic functionality of at least the base station 10 is compatible to the LTE Rel. 8 standard.

While the LTE standard only provides a single, fixed TTI of 1 millisecond, which is not sufficient to satisfy latency requirements of novel machine-type communications and/or vehicle safety systems and the like, the base station 10 according to the embodiments is configured (e.g. via O&M (operation and maintenance) or RNC, radio network control, or the like) to use, cf. step 200 of Fig. 2, a first scheduling granularity for scheduling first resources associated with a first frequency range, and to use, cf. step 210 of Fig. 2, a second scheduling granularity, which is different from said first scheduling granularity, for scheduling second resources associated with a second frequency range. Although Fig. 2 depicts the steps 200, 210 in sequence, according to some embodiments, the first and second scheduling granularities may also be used in an at least partially overlapping fashion by the base station 10, or even fully simultaneously.

This is enabled by considering different frequency ranges of the overall time/frequency resources available for use by the base station 10 and/or other devices 20 of the system 100 (Fig. 1), wherein said different scheduling granularities are associated with different frequency ranges.

In this context, Figure 3 exemplarily and schematically depicts time/frequency resources for downlink transmissions from the base station 10 (Fig. 1) to one or more terminals 20 according to an embodiment, wherein time and frequency dimension is indicated by the arrows t, f.

As can be seen from Fig. 3, a first group gsc1 of frequency subcarriers (short: subcarriers) sc1, .., sc12 is provided, said first group gsc1 of frequency subcarriers defining a first frequency range, which is associated with a first scheduling granularity. I.e., for scheduling resources within said first frequency range represented by the group gsc1, the base station 10 uses the first scheduling granularity. The first scheduling granularity may e.g. correspond with the conventional LTE Rel. 8 scheduling granularity that is derived from a standardized transmission time interval (TTI) of 1 millisecond, which is indicated by reference sign TTI1 of Fig. 3.

According to an embodiment, the frequency (i.e., subcarrier) allocations for the first and/or further frequency ranges may preferably be in integer multiples of physical resource blocks (N x 12 subcarriers). According to a further embodiment, the frequency (i.e., subcarrier) allocations for the first and/or further frequency ranges may also comprise single subcarriers and/or groups of single subcarriers, which are not necessarily contiguous or adjacent, respectively.

A transmission time interval TTI1 of the first frequency range of Fig. 3 comprises 14 OFDM symbols, the first three of which may e.g. be used for control information. These three OFDM symbols are denoted with reference sign gsy1 in Fig. 3. The further eleven OFDM symbols which are usually used for data transmission, are denoted with reference sign gsy2. Likewise, a next TTI1 comprises two OFDM symbol groups gsy3, gsy4, and so on.

The transmission time intervals TTI1 represent the smallest resource unit (along time dimension) which may individually be scheduled by a scheduler of the base station 10 (Fig. 1) and thus define the scheduling granularity for the first frequency range represented by the subcarrier group gsc1.

As can also be seen from Fig. 3, a second group gsc2 of subcarriers scx, .., scy is provided, said second group gsc2 of subcarriers defining a second frequency range, which is associated with a second scheduling granularity. I.e., for scheduling resources within said second frequency range represented by the group gsc2, the base station 10 uses the second scheduling granularity. According to an embodiment, the second scheduling granularity may e.g. correspond with a fraction of the conventional LTE Rel. 8 scheduling granularity of 1 millisecond. For example, the second scheduling granularity may e.g. be about 1/7 millisecond.

A transmission time interval TTI2 of the second frequency range of Fig. 3 may hence comprise only two OFDM symbols, cf. the groups gsy5, gsy6, gsy7, gsy8. The group gsy9 may comprise three OFDM symbols according to an embodiment.

In analogy to the first frequency range (subcarrier group gsc1 described above), the second frequency range (subcarrier group gsc2) may also provide for three OFDM symbols for control information (cf. group gsy1, the dashed OFDM symbols).

The transmission time intervals TTI2 represent the smallest resource unit (along time dimension) which may individually be scheduled by a scheduler of the base station 10 (Fig. 1) and thus define the scheduling granularity for the second frequency range represented by the subcarrier group gsc2.

As can be seen from Fig. 3, during specific time intervals ti1, ti2, which according to the present embodiment are fully overlapping and thus identical, different scheduling granularities are used within the different frequency ranges gsc1, gsc2.

It is evident that the specific number of subcarriers for the groups gsc1, gsc2, which define the frequency ranges, may be chosen by the base station, especially differently from the scheme depicted by Fig. 3, according to which each group gsc1, gsc2 only comprises rather few subcarriers for the sake of clarity.

For example, according to an embodiment which is based on an LTE Rel. 8 system, about 10 percent of the whole frequency spectrum available may be assigned to the second frequency range, i.e. for transmission with the second scheduling granularity, while about 90 percent of the whole frequency spectrum available may be assigned to the first frequency range, i.e. for transmission with the first scheduling granularity. Thus, about 10 percent of system capacity would be provided for systems/terminals with low latency requirements, which could make use of the reduced second TTI2 of e.g. about 1/7 ms, whereas about 90 percent of system capacity would be provided for conventional LTE Rel. 8 terminals.

Advantageously, by using a type of "frequency division multiplexing", i.e. assigning the different scheduling granularities to different frequency ranges, both conventional LTE capable terminals as well as terminals according to the present embodiments, which may e.g. selectively use TTI1 and/or TTI2, may simultaneously be served by the base station 10.

For implementing the principle according to the embodiments, the base station 10 may comprise respective functionality 12 (Fig. 1), e.g. in form of a processor and/or computer program code and the like, which may also be added to existing LTE capable circuitry. This also applies to the terminal 20, cf. circuitry 22.

According to a further embodiment, the principle based on at least two different scheduling granularities explained above with respect to Fig. 3 for the downlink direction may also be applied to the uplink direction in analogous fashion.

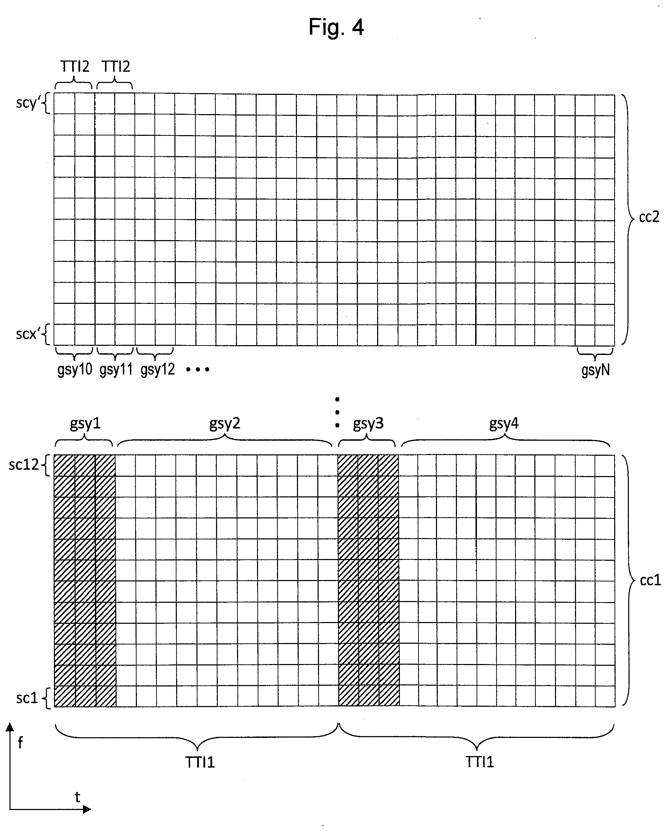

Fig. 4 exemplarily and schematically depicts time/frequency resources for downlink transmissions from the base station 10 (Fig. 1) to one or more terminals 20 according to a further embodiment.

In contrast to Fig. 3, where for example a single carrier is used for transmitting the various groups of subcarriers, the subcarriers sc1, .., sc12 and scx', .., scy' of Fig. 4 are transmitted using different component carriers cc1, cc2. The basic concept of component carriers is disclosed by LTE rel. 10 standardization documents.

Hence, according to the embodiment of Fig. 4, the first frequency range associated with a first scheduling granularity is transmitted using the first component carrier cc1, and the second frequency range associated with a second scheduling granularity is transmitted using the second component carrier cc2.

In addition, the time/frequency resources associated with the second component carrier cc2 are not used for control information (no dashed OFDM symbols) - these are rather transported by means of resource of the first component carrier cc1, cf. OFDM symbols gsy1, gsy3.

According to a further embodiment, the time/frequency resources associated with the second component carrier cc2 may also be used for transmitting control information, particularly for those terminals which operate with the second scheduling granularity.

As can be seen from Fig. 4, the scheduling granularity of resources associated with the first component carrier cc1 is fourteen OFDM symbols, also cf. the first transmission time interval TTI1, whereas the scheduling granularity of resources associated with the second component carrier cc2 is two OFDM symbols, also cf. the second transmission time interval TTI2 and the OFDM symbol groups gsy10, gsy11, gsy12, .., gsyN.

Although the aforementioned examples refer to LTE Rel. 8 and/or Rel. 10, the principle according to the embodiments is not limited to such LTE systems, but may generally be used with any communications system that makes use of time/frequency resources.

Fig. 5 exemplarily and schematically depicts time/frequency resources for downlink transmissions from the base station 10 (Fig. 1) to one or more terminals 20 according to a further embodiment. During a first time interval ti1 the first frequency range gsc1' is operated with a first scheduling granularity (e.g., TTI of 1ms) resulting in the depicted first transmission time interval TTI1. During a second time interval ti2, which according to the present embodiment partly overlaps with the first time interval ti1, the second frequency range gsc2' is operated with a smaller second scheduling granularity resulting in the depicted second transmission time intervals TTI2.

According to a further embodiment, prior to the second time interval ti2 and/or after said second time interval ti2, the second frequency range gsc2' may be operated with either the first or second scheduling granularity, or with a further, i.e. third, scheduling granularity.

According to a further embodiment, during the first time interval ti1, the time frequency resources of the first frequency range sc1' may be used to transmit user and/or control data, cf. the OFDM symbol groups gsy1, gsy2.

According to a further embodiment, during the second time interval ti2, two OFDM symbols each form respective groups gsy5', gsy6', gsy7', gsy8', which correspond to the smaller second scheduling granularity and thus reduced TTI2. According to an embodiment, also the groups gsy5', gsy6', gsy7', gsy8', which correspond to the smaller second scheduling granularity may be used to transmit control and/or user data.

The principle according to the embodiments advantageously enables to attain very low round trip times while also enabling backward compatible access with conventional terminals/services. For example, when using the principle according to the embodiments to extend existing LTE systems, very low latency Massive Machine Communication (MMC) using LTE can be attained, while also enabling backward compatible access with conventional LTE terminals/services. In other words, the base station according to the embodiments may serve terminals with very low (E2E) latency requirements while at the same time still supporting conventional LTE terminals. Advantageously, according to an embodiment, the ratio of the time/frequency resources which is used for the first and second scheduling granularity may dynamically be controlled, i.e. depending on a load condition within a cell served by the base station.

According to an embodiment, the terminal 20 (Fig. 1) is configured to selectively use different transmission time intervals for data transmissions to a base station 10.

The terminal 20 may e.g. determine which transmission time interval (TTI length) to use depending on static information, which is e.g. standardized and known to both the terminal 20 and the base station 10, and/or depending on resource partitioning information provided by said base station 10 via e.g. system information broadcast and/or RRC signalling.

Also, according to a further embodiment, the terminal 20 may notify the base station 10 of its capabilities and/or requirements, inter alia regarding scheduling granularity and/or TTI, whereupon the base station may assign resources to said terminal taking into account this information of the terminal 20.

According to an embodiment, novel Massive Machine Communication (MMC) applications such as smart grid or traffic safety which require very low E2E latencies in the order of 8ms may be supported.

According to a further embodiment, the mobile wireless network will not be used for MMC traffic alone but shall be able to carry other types of traffic such as voice or broadband, where conventional TTI of 1ms is sufficient and legacy equipment shall be usable, e.g. an electricity utility may want to use such a system for mission critical grid control on one hand, and for ordinary office communication of the mobile workforce or delay-insensitive smart metering on the other hand.

By employing the principle according to the embodiments, existing systems such as e.g. LTE may advantageously be extended to accommodate MMC or other low latency-based systems, while at the same time still being able to serve conventional LTE terminals. I.e., there is no requirement for building up dedicated MMC systems; these may rather also be served by the base station according to the embodiments.

According to a further embodiment, a conventional LTE-type 1ms TTI and a reduced TTI are separated by means of frequency division duplex (FDM), where typically a subset of resource blocks will be allocated said reduced TTI. According to a further embodiment, with a normal cyclic prefix, the LTE TTI carries 14 symbols. So a reasonable shortened TTI could be e.g. 1/7ms, each shortened TTI carrying two symbols, resulting in about 8/7 ms HARQ RTT (assuming 8 HARQ processes). The symbols and prefixes are typically time synchronized across the system bandwidth.

According to a further embodiment, the frequency resources using shortened TTI (for example, group gsc2 of Fig. 3) may carry data and all relevant signals such as DL control signaling or UL/DL ACK/NACK. According to a further embodiment, MMC devices or terminals, generally, using the shortened TTI could transmit signaling such as CQI or RACH also on the normal TTI grid (for example, group gsc1 of Fig. 3). According to a further embodiment, RACH could also be used on both TTI levels, on the conventional TTI for a first UL time synchronization and then on the shortened TTI for fine-tuning, in particular when optimizing for stationary MMC devices (e.g. smart grid).

According to a further embodiment, the FDM resource partitioning, i.e. determining which frequency range to use with which scheduling granularity or TTI, respectively, is typically semi-static via system information broadcast or user-specific by means of RRC signaling. In this way, the MMC devices (or other terminals) are aware of the bandwidth and frequency location allocated for shortened TTI, and the location of DL control signaling can be implicitly defined (predefined as function of allocated bandwidth/position).

According to a further embodiment, the data part with shortened TTI could in principle also be scheduled fully dynamically.

According to a further embodiment, the frequency resources (i.e. subcarriers scx, .., scy) using shortened TTI are typically contiguous (for example, a subset of resource blocks are used) (but might also be non-contiguous e.g. when dynamic data scheduling is applied).

According to a further embodiment, in case some resources configured for shortened TTI are not used for some time, these resources can in principle be allocated with conventional 1ms TTI data traffic.

According to a further embodiment, a first (i.e., conventional) scheduling granularity with TTI of 1ms and a second scheduling granularity with shortened TTI (i.e. 1/7 ms) are used on a same carrier.

According to a further embodiment, in the downlink, some resources may not be allocated with the shortened TTI, e.g. resources spared for synchronization signals, broadcast channel or L1/2 control channels (i.e. blanking can be applied or overlap be avoided).

According to a further embodiment, in the example of Fig. 3, the first three symbols of a 1ms subframe (i.e. symbol group gsy1) are not allocated for shortened TTI as they carry the PDCCH.

According to a further embodiment, in the uplink, frequency resources occupied by PUCCH or RACH are not allocated with the shortened TTI (for example, an overlap can easily be avoided via configuration).

According to a further embodiment, the resource regions denoted by the frequency ranges according to the embodiments are not required to be contiguous along frequency dimension f. In other words, a "frequency range" such as e.g. range gsc2 of Fig. 3 may comprise several frequency subranges (wherein each subrange may e.g. comprise at least one subcarrier) which are not adjacent to each other. Thereby, frequency diversity may be employed.

According to a further embodiment, it is also possible to regularly and/or irregularly assign single subcarriers or groups of subcarriers with different scheduling granularities (along time dimension) and corresponding transmission time intervals.

According to a further embodiment, the frequency ranges gsc1, gsc2 (Fig. 3) may be defined statically or dynamically. It is also possible to employ a frequency hopping scheme which dynamically assigns varying frequency resources to the frequency ranges gsc1, gsc2. The hopping pattern or assignment scheme, respectively, may be standardized or negotiated between components 10, 20 (Fig. 1) .

According to a further embodiment, a number of hybrid automatic repeat request (HARQ) processes used within a specific frequency range depends on the scheduling granularity used within said specific frequency range. For example, with the resource partitioning according to Fig. 3, eight HARQ processes may be used for the first frequency range gsc1, and less than eight, e.g. six, HARQ processes may be used for the second frequency range gsc2.

According to a further embodiment, a second scheduling granularity and thus shortened TTI is applied on a second component carrier while control signals such as synchronization signals, broadcast channel, system information, CQI or RACH may be transmitted on a first component carrier.

Although not being limited to LTE-based systems, the principle according to the embodiments can advantageously be used to extend LTE and/or LTE-A and/or 5G wireless communications systems. The principle according to the embodiments enables to attain very low latencies, particularly E2E latencies, while preserving backward compatibility.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Terminal (20) for a cellular communications network (100), wherein time and frequency resources are used for data transmission, wherein the terminal (20) is configured to selectively use different transmission time intervals for data transmissions from and/or to a base station (10), to receive resource partitioning information from the base station, and to determine which transmission time interval to use depending on the received resource partitioning information, wherein a first scheduling granularity is used for scheduling first resources associated with a first frequency range, and a second scheduling granularity, which is different from said first scheduling granularity, is used for scheduling second resources associated with a second frequency range, wherein said first and second scheduling granularities are used within respective time intervals (ti1, ti2) which at least partly overlap each other, wherein the terminal (20) is configured to determine which transmission time interval to use by scanning downlink control channels: a first control channel for data on a first transmission time interval and a second control channel for data on a second transmission time interval.

2. Terminal (20) according to claim 1, wherein the terminal (20) is configured to receive the resource partitioning information via system information broadcast and/or RRC signalling.

3. Terminal (20) according to claim 1, wherein the terminal (20) is configured to notify the base station 10 of its capabilities and/or requirements regarding scheduling granularity and/or transmission time interval

4. Terminal (20) according to claim 1, wherein the terminal (20) is configured to request for different or smaller scheduling granularities.

5. Terminal (20) according to claim 1, wherein said first resources associated with said first frequency range comprise at least a first group (gsc1) of adjacent subcarriers (sc1, .., sc12), and/or wherein said second resources associated with said second frequency range comprise at least a second group (gsc2) of adjacent subcarriers (scx, .., scy).

6. Terminal (20) according to one of the preceding claims, wherein said first frequency range is associated with a first component carrier, and/or wherein said second frequency range is associated with a second component carrier, which is different from said first component carrier.

7. Terminal (20) according to one of the preceding claims, wherein a first transmission time interval is associated with said first scheduling granularity, and wherein a second transmission time interval, which is different from said first transmission time interval, is associated with said second scheduling granularity.

8. Terminal (20) according to one of the preceding claims, wherein the first scheduling granularity is about 1 millisecond, and wherein the second scheduling granularity is smaller than said first scheduling granularity, wherein the second scheduling granularity preferably ranges from about 50 microseconds to about 200 microseconds.

9. Terminal (20) according to one of the preceding claims, wherein the terminal (20) is configured to transmit control data in a first frequency range with a first transmission time interval (TTI1), and to transmit user data in a second frequency range with a second transmission time interval (TTI2).

## Patentansprüche

1. Endgerät (20) für ein zellulares Kommunikationsnetz (100), wobei Zeit- und Frequenzressourcen für die Datenübertragung verwendet werden, wobei das Endgerät (20) dazu ausgelegt ist, selektiv verschiedene Übertragungszeitintervalle für Datenübertragungen von und/oder zu einer Basisstation (10) zu verwenden, Ressourcenunterteilungsinformationen von der Basisstation zu empfangen und zu bestimmen, welches Übertragungszeitintervall abhängig von den empfangenen Ressourcenunterteilungsinformationen zu verwenden ist, wobei eine erste Einteilungsgranularität zum Einteilen erster Ressourcen verwendet wird, die einem ersten Frequenzbereich zugeordnet sind, und eine zweite Einteilungsgranularität, die sich von der ersten Einteilungsgranularität unterscheidet, zum Einteilen zweiter Ressourcen verwendet wird, die einem zweiten Frequenzbereich zugeordnet sind,
wobei die erste und zweite Einteilungsgranularität innerhalb jeweiliger Zeitintervalle (ti1, ti2) verwendet werden, die sich zumindest teilweise gegenseitig überlappen, wobei das Endgerät (20) dazu ausgelegt ist, das zu verwendende Übertragungszeitintervall durch Scannen von Downlink-Steuerkanälen zu bestimmen:
einen ersten Steuerkanal für Daten in einem ersten Übertragungszeitintervall und einen zweiten Steuerkanal für Daten in einem zweiten Übertragungszeitintervall.

2. Endgerät (20) nach Anspruch 1, wobei das Endgerät (20) dazu ausgelegt ist, die Ressourcenunterteilungsinformationen über Systeminformationsbroadcast und/oder RRC-Signalisierung zu empfangen.

3. Endgerät (20) nach Anspruch 1, wobei das Endgerät (20) dazu ausgelegt ist, die Basisstation (10) über ihre Fähigkeiten und/oder Anforderungen bezüglich der Einteilungsgranularität und/oder des Übertragungszeitintervalls zu informieren.

4. Endgerät (20) nach Anspruch 1, wobei das Endgerät (20) dazu ausgelegt ist, unterschiedliche oder kleinere Einteilungsgranularitäten anzufordern.

5. Endgerät (20) nach Anspruch 1, wobei die dem ersten Frequenzbereich zugeordneten ersten Ressourcen mindestens eine erste Gruppe (gsc1) benachbarter Unterträger (sc1,.., sc12) umfassen, und/oder wobei die dem zweiten Frequenzbereich zugeordneten zweiten Ressourcen mindestens eine zweite Gruppe (gsc2) benachbarter Unterträger (scx,.., scy) umfassen.

6. Endgerät (20) nach einem der vorhergehenden Ansprüche, wobei der erste Frequenzbereich einem ersten Komponententräger zugeordnet ist, und/oder wobei der zweite Frequenzbereich einem zweiten Komponententräger zugeordnet ist, der sich von dem ersten Komponententräger unterscheidet.

7. Endgerät (20) nach einem der vorhergehenden Ansprüche, wobei ein erstes Übertragungszeitintervall der ersten Einteilungsgranularität zugeordnet ist, und wobei ein zweites Übertragungszeitintervall, das sich von dem ersten Übertragungszeitintervall unterscheidet, der zweiten Einteilungsgranularität zugeordnet ist.

8. Endgerät (20) nach einem der vorhergehenden Ansprüche, wobei die erste Einteilungsgranularität etwa 1 Millisekunde ist, und wobei die zweite Einteilungsgranularität kleiner als die erste Einteilungsgranularität ist, wobei die zweite Einteilungsgranularität vorzugsweise von etwa 50 Mikrosekunden bis etwa 200 Mikrosekunden reicht.

9. Endgerät (20) nach einem der vorhergehenden Ansprüche, wobei das Endgerät (20) dazu ausgelegt ist, Steuerdaten in einem ersten Frequenzbereich mit einem ersten Sendezeitintervall (TTI1) und Benutzerdaten in einem zweiten Frequenzbereich mit einem zweiten Sendezeitintervall (TTI2) zu übertragen.

## Revendications

1. Terminal (20) pour un réseau de communication cellulaire (100), dans lequel des ressources de temps et de fréquence sont utilisées pour la transmission de données, dans lequel le terminal (20) est configuré pour utiliser sélectivement différents intervalles de temps de transmission pour des transmissions de données en provenance et/ou à destination d'une station de base (10), pour recevoir des informations de partitionnement de ressources depuis la station de base, et pour déterminer quel intervalle de temps de transmission est à utiliser en fonction des informations de partitionnement de ressources reçues, dans lequel une première granularité de répartition est utilisée pour répartir des premières ressources associées à une première plage de fréquences et une deuxième granularité de répartition, qui est différente de ladite première granularité de répartition, est utilisée pour répartir des deuxièmes ressources associées à une deuxième plage de fréquences, dans lequel lesdites première et deuxième granularités de répartition sont utilisées dans des intervalles de temps respectifs (ti1, ti2) qui se recouvrent au moins en partie, dans lequel le terminal (20) est configuré pour déterminer quel intervalle de temps de transmission est à utiliser en balayant des canaux de commande en liaison descendante : un premier canal de commande à la recherche de données pour un premier intervalle de temps de transmission et un deuxième canal de commande à la recherche de données pour un deuxième intervalle de temps de transmission.

2. Terminal (20) selon la revendication 1, dans lequel le terminal (20) est configuré pour recevoir les informations de partitionnement de ressources par l'intermédiaire d'une diffusion d'informations système et/ou d'une signalisation RRC.

3. Terminal (20) selon la revendication 1, dans lequel le terminal (20) est configuré pour informer la station de base (10) de ses capacités et/ou besoins concernant la granularité de répartition et/ou l'intervalle de temps de transmission.

4. Terminal (20) selon la revendication 1, dans lequel le terminal (20) est configuré pour demander des granularités de répartition différentes ou inférieures.

5. Terminal (20) selon la revendication 1, dans lequel lesdites premières ressources associées à ladite première plage de fréquence comprennent au moins un premier groupe (gsc1) de sous-porteuses adjacentes (sc1, ..., sc12), et/ou dans lequel lesdites deuxièmes ressources associées à ladite deuxième plage de fréquence comprennent au moins un deuxième groupe (gsc2) de sous-porteuses adjacentes (scx, ..., scy).

6. Terminal (20) selon l'une quelconque des revendications précédentes, dans lequel ladite première plage de fréquences est associée à une première porteuse partielle, et/ou dans lequel ladite deuxième plage de fréquences est associée à une deuxième porteuse partielle qui est différente de ladite première porteuse partielle.

7. Terminal (20) selon l'une quelconque des revendications précédentes, dans lequel un premier intervalle de temps de transmission est associé à ladite première granularité de répartition, et dans lequel un deuxième intervalle de temps de transmission, qui est différent dudit premier intervalle de temps de transmission, est associé à ladite deuxième granularité de répartition.

8. Terminal (20) selon l'une quelconque des revendications précédentes, dans lequel la première granularité de répartition est égale à environ 1 milliseconde, et dans lequel la deuxième granularité de répartition est inférieure à ladite première granularité de répartition, dans lequel la deuxième granularité de répartition varie de préférence d'environ 50 microsecondes à environ 200 microsecondes.

9. Terminal (20) selon l'une quelconque des revendications précédentes, dans lequel le terminal (20) est configuré pour transmettre des données de commande dans une première plage de fréquence avec un premier intervalle de temps de transmission (TTI1), et pour transmettre des données utilisateur dans une deuxième plage de fréquences avec un deuxième intervalle de temps de transmission (TTI2).
